# EUROPEAN PATENT APPLICATION

(11) **EP 2 334 117 A1**
(43) Date of publication of application: **15.06.2011**
(21) Application number: 09817888.2
(22) Date of filing: 02.10.2009
(51) Int. Cl.: H04W 48/16, H04W 36/04

(54) **NETWORK DEVICE AND CELL SELECTION METHOD**

(30) Priority: 02.10.2008 JP 2008257816
(71) Applicant: NTT DOCOMO, INC., Chiyoda-ku Tokyo 100-6150 (JP)
(72) Inventor: AOYAGI, Kenichiro, Chiyoda-ku, Tokyo 100-6150 (JP)
(74) Representative: HOFFMANN EITLE
(86) International application number: PCT/JP2009/067221
(87) International publication number: WO 2010/038856

(57) **Abstract**

A network device (10) includes: a cell information management unit (11) configured to manage cell information including sizes of the plurality of cells #1 to #4, #11 to #13, #141; and a cell selection unit (12) configured to select a target cell for connection or a camp on cell for a mobile station UE#z existing in a first cell #1 included in the plurality of cells#l to #4, #11 to #13, #141. The cell selection unit selects a second cell #11 having a size larger than the first cell #1 as the target cell for connection or the camp on cell, among the plurality of cells #1 to #4, #11 to #13, #141.

## Description

### TECHNICAL FIELD

The present invention relates to a network device in a mobile communication system in which multiple cells covering at least part of a certain area and using different frequencies are arranged, and to a cell selection method therefor.

### BACKGROUND ART

In recent years, there has been application of a mobile communication system in which multiple macrocells covering at least part of a certain area and using different frequencies (for example, a 800 MHz band or a 2 GHz band) are arranged.

Such a mobile communication system is capable of covering various areas by utilizing a fact that frequencies used by the macrocells have different electric wave characteristics.

In addition, studies have been made as to providing a "femtocell" which is a small coverage area by installing a small radio base station called a "radio base station for femtocell."

In the mobile communication system in which multiple macrocells and a femtocell using different frequencies are arranged as described above, a network device is configured to perform processing of selecting a target cell for connection or a camp on cell for each of mobile stations (cell selection processing) in consideration of a traffic state, a service provision state, and the like.

### SUMMARY OF INVENTION

### TECHNICAL PROBLEM

However, the cell selection processing in a conventional mobile communication system has the following problem. Specifically, when cells covering at least part of a certain area have different sizes, and when the network device selects a cell having a size smaller than the current target cell for connection or camp on cell of a specific mobile station, there is a possibility that such a specific mobile station fails to continue communication or camping on.

Hence, the present invention has been made in view of the aforementioned problem and an objective thereof is to provide a network device and a cell selection method in which a communication state or a camp on state of a mobile station is not affected by cell selection processing in a mobile communication system having different size cells overlapped in a certain area.

### MEANS FOR SOLVING THE PROBLEM

A first feature of the present invention is summarized as a network device in a mobile communication system in which a plurality of cells cover at least part of a certain area and use different frequencies are arranged, the network device comprising: a cell information management unit configured to manage cell information including sizes of the plurality of cells; and a cell selection unit configured to select a target cell for connection or a camp on cell for a mobile station existing in a first cell included in the plurality of cells, wherein the cell selection unit selects a second cell having a size larger than the first cell as the target cell for connection or the camp on cell, among the plurality of cells.

A second feature of the present invention is summarized as a cell selection method in a mobile communication system in which a plurality of cells cover at least part of a certain area and use different frequencies are arranged, the cell selection method comprising: a step A of managing cell information including sizes of the plurality of cells by a network device in the mobile communication system; and a step B of selecting a target cell for connection or a camp on cell by the network device for a mobile station existing in a first cell included in the plurality of cells, wherein in the step B, the network device selects a second cell having a size larger than the first cell as the target cell for connection or the camp on cell, among the plurality of cells.

### ADVANTAGEOUS EFFECTS OF INVENTION

As described above, the present invention makes it possible to provide a network device and a cell selection method in which a communication state or a camp on state of a mobile station is not affected by cell selection processing in a mobile communication system having different size cells overlapped in a certain area.

### BRIEF DESCRIPTION OF DRAWINGS

[Fig. 1] Fig. 1 is an overall configuration diagram of a mobile communication system according to a first embodiment of the present invention.
[Fig. 2] Fig. 2 is a functional block diagram of a network device according to the first embodiment of the present invention.
[Fig. 3] Fig. 3 is a sequence diagram showing an operation of a mobile communication system according to the first embodiment of the present invention.
[Fig. 4] Fig. 4 is a sequence diagram showing an operation of the mobile communication system according to the first embodiment of the present invention.
[Fig. 5] Fig. 5 is a sequence diagram showing an operation of the mobile communication system according to the first embodiment of the present invention.
[Fig. 6] Fig. 6 is a sequence diagram showing an operation of the mobile communication system according to the first embodiment of the present invention.
[Fig. 7] Fig. 7 is a sequence diagram showing an operation of the mobile communication system according to the first embodiment of the present invention.
[Fig. 8] Fig. 8 is a sequence diagram showing a mobile communication system according to the first embodiment of the present invention.

### DESCRIPTION OF EMBODIMENT

### (Configuration of Mobile Communication System according to First Embodiment of the Present Invention)

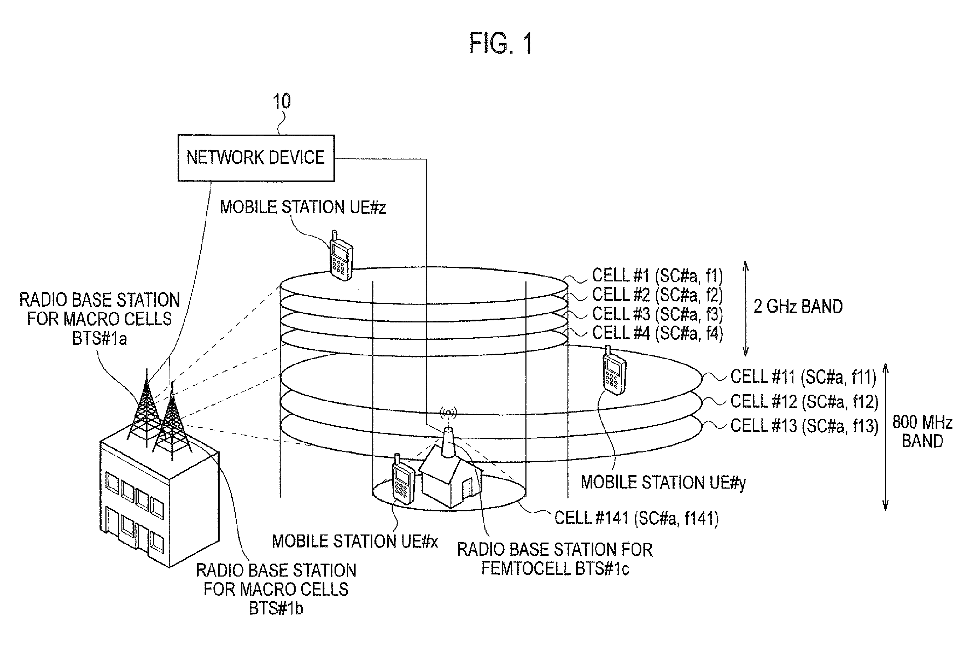

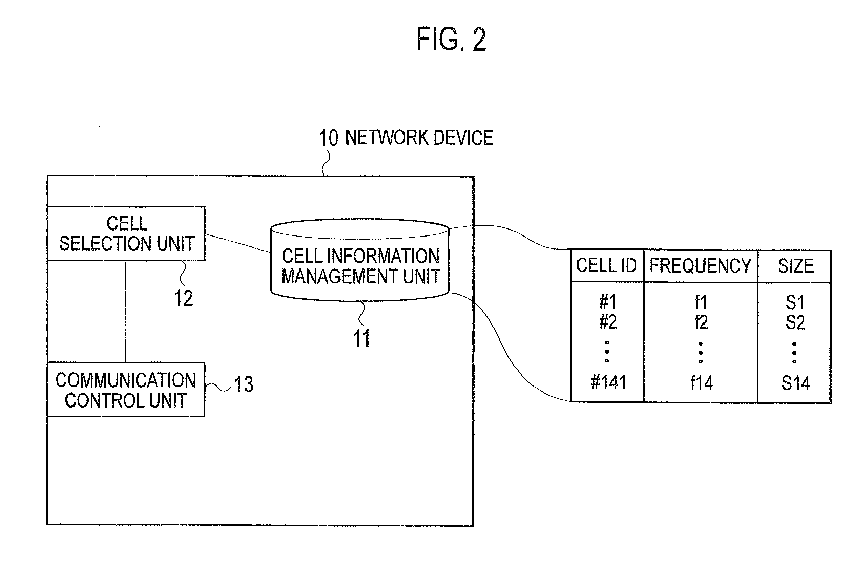

A configuration of a mobile communication system according to a first embodiment of the present invention is described with reference to Fig. 1 and Fig. 2.

As shown in Fig. 1, the mobile communication system according to this embodiment includes a network device 10, radio base stations for macrocells BTS#1a, BTS#1b, and a radio base station for femtocell BTS#1c.

The mobile communication system according to this embodiment is configured such that cells #1 to #4, cells #11 to #13, and a cell #141 cover at least part of a certain area. In other words, the mobile communication system is configured such that cells #1 to #4, cells #11 to #13, and a cell #141 overlap with each other in the certain area.

Note that the cells #1 to #4 are macrocells managed by the radio base station for macrocells BTS#1a, the cells #11 to #13 are macrocells managed by the radio base station for macrocells BTS#1b, and the cell #141 is a femtocell managed by the radio base station for femtocell BTS#1c.

In addition, the cells #1 to #4, the cells #11 to #13, and the cell #141 are configured to use frequencies f1 to f4, f11 to 13, and f#141 which are different from each other, and to use the same scramble code SC#a. For example, the frequencies f1 to f4 are 2-GHz-band frequencies, while the frequencies f11 to 13, and f#141 are 800-MHz-band frequencies.

As shown in Fig. 2, the network device 10 includes a cell information management unit 11, a cell selection unit 12, and a communication control unit 13.

It should be noted that when the mobile communication system according to this embodiment is a mobile communication system employing a WCDMA method, the network device 10 is an exchange MSC/SGSN or a radio network controller RNC. In addition, when the mobile communication system according to this embodiment is a mobile communication system employing an LTE (Long Term Evolution) method, the network device 10 is an exchange MME.

The cell information management unit 11 is configured to manage cell information including sizes of the multiple cells #1 to #4, #11 to #13, and #141.

For example, the cell information management unit 11 is configured to manage cell information for associating a "cell ID" indicating identification information of each cell, a "frequency" indicating a frequency used in the cell, and a "size" indicating the size of the cell with each other.

Note that as the "size," a radius of the cell may be set, the area of the cell may be set, or a value corresponding to the size of the cell may be set.

The cell selection unit 12 is configured to select a target cell for connection or a camp on cell for a mobile station (for example, a mobile station UE#z) existing in a first cell (for example, the cell #1) included in the multiple cells #1 to #4, #11 to #13, and #141.

Specifically, the cell selection unit 12 is configured to select a second cell (for example, the cell #11) having a size larger than the first cell (for example, the cell #1) as the target cell for connection or the camp on cell for the aforementioned mobile station (for example, the mobile station UE#z), among the multiple cells #1 to #4, #11 to #13, and #141.

The cell selection unit 12 may be configured to select the second cell #11, for example, as a target cell for connection to which the mobile station UE should connect an dedicated channel thereof, in response to a connection request signal (RRC Connection Request) from the mobile station UE#z, the signal requesting connection of the dedicated channel.

In addition, the cell selection unit 12 may be configured to select the second cell #11 as a target cell for connection to which the mobile station UE#z should reconnect the dedicated channel, in response to a reconnection request signal (Cell Update) from the mobile station UE#z, the signal requesting reconnection of the dedicated channel.

Moreover, the cell selection unit 12 may be configured to select the second cell #11 as a target cell for connection to which the mobile station UE#z should connect a common channel.

Besides, the cell selection unit 12 may be configured to select the second cell #11 as the target cell for connection to which the mobile station UE#z should reconnect the common channel, in response to a reconnection request signal (Cell Update) from the mobile station UE#z, the signal requesting reconnection of the dedicated channel.

Further, the cell selection unit 12 may be configured, upon receipt of a measurement result (Measurement Report) of a radio quality in the mobile station UE#z, to select the second cell #11 as a target cell for connection after a handover by the mobile station UE#z in response to the measurement result.

Still further, the cell selection unit 12 may be configured to select the second cell #11, when communication by the mobile station UE#z is terminated, as a camp on cell of the mobile station UE#z after the termination of communication.

The communication control unit 13 is configured to control communication by mobile stations UE in cells managed by a radio base station BTS under the network device 10.

### (Operation of Mobile Communication System according to First Embodiment of the Present Invention)

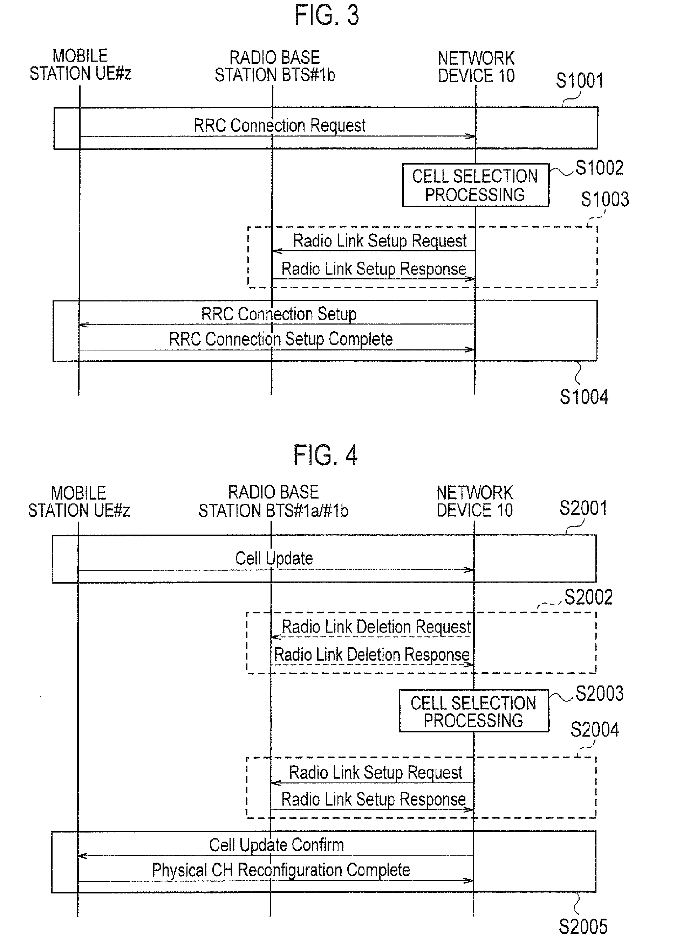

Hereinbelow, a description is given of an operation of the mobile communication system according to the first embodiment of the present invention with reference to Fig. 3 to Fig. 8.

Firstly, with reference to Fig. 3, a description is given of an operation of setting up (connecting) an dedicated channel of the mobile station UE#z existing the cell #1 in the mobile communication system according to the first embodiment of the present invention.

As shown in Fig. 3, in Step S1001, the mobile station UE#z transmits a connection request signal (RRC Connection Request) to the network device 10, the signal requesting connection of an dedicated channel.

In Step S1002, the network device 10 selects the cell #11 as a target cell for connection to which the mobile station UE#z should connect the dedicated channel, in response to the connection request signal (RRC Connection Request) from the mobile station UE#z.

In Step S1003, the network device 10 transmits a radio link setup request signal (Radio Link Setup Request) to the radio base station for macrocells BTS#7 b managing the cell #11, and then the radio base station for macrocells BTS#lb transmits a radio link setup completion signal (Radio Link Setup Complete) to the network device 10.

In Step S 1004, the network device 10 transmits a connection setup signal (RRC Connection Setup) to the mobile station UE#z, the signal making a notification that a connection preparation for the dedicated channel is completed. In addition, the mobile station UE#z then transmits a connection setup completion signal (RRC Connection Setup Complete) to the network device 10, the signal making a notification that the connection of the dedicated channel is completed.

Secondly, with reference to Fig. 4, a description is given of an operation of reconnecting the dedicated channel of the mobile station UE#z existing in the cell #1 in the mobile communication system according to the first embodiment of the present invention.

As shown in Fig. 4, in Step S2001, when the mobile station UE#z which sets up (connects) an dedicated channel in the cell #1 detects deterioration of a radio quality in the dedicated channel, the mobile station UE#z transmits a connection request signal (Cell Update) requesting reconnection of the dedicated channel to the network device 10.

In Step 52002, the network device 10 transmits a radio link deletion request signal (Radio Link Deletion Request) to the radio base station for macrocells BTS#1a managing the cell #1., and then the radio base station for macrocells BTS#1a transmits a radio link deletion completion signal (Radio Link Deletion Response) to the network device 10.

In Step S2003, the network device 10 selects the cell #11 as a target cell for connection to which the mobile station UE#z should reconnect the dedicated channel, in response to the reconnection request signal (Cell Update) from the mobile station UE#z.

In Step S2004, the network device 10 transmits a radio link setup request signal (Radio Link Setup Request) to the radio base station for macrocells BTS#1b managing the cell #11, and then the radio base station for macrocells BTS#1b transmits a radio link setup completion signal (Radio Link Setup Complete) to the network device 10.

In Step S2005, the network device 10 transmits a reconnection confirmation signal (Cell Update Confirm) to the mobile station UE#z, the signal making a notification that a reconnection preparation for the dedicated channel is completed. In addition, the mobile station UE#z then transmits a reconnection setup completion signal (Physical CH Reconfiguration Complete) to the network device 10, the signal making a notification that the reconnection of the dedicated channel is completed.

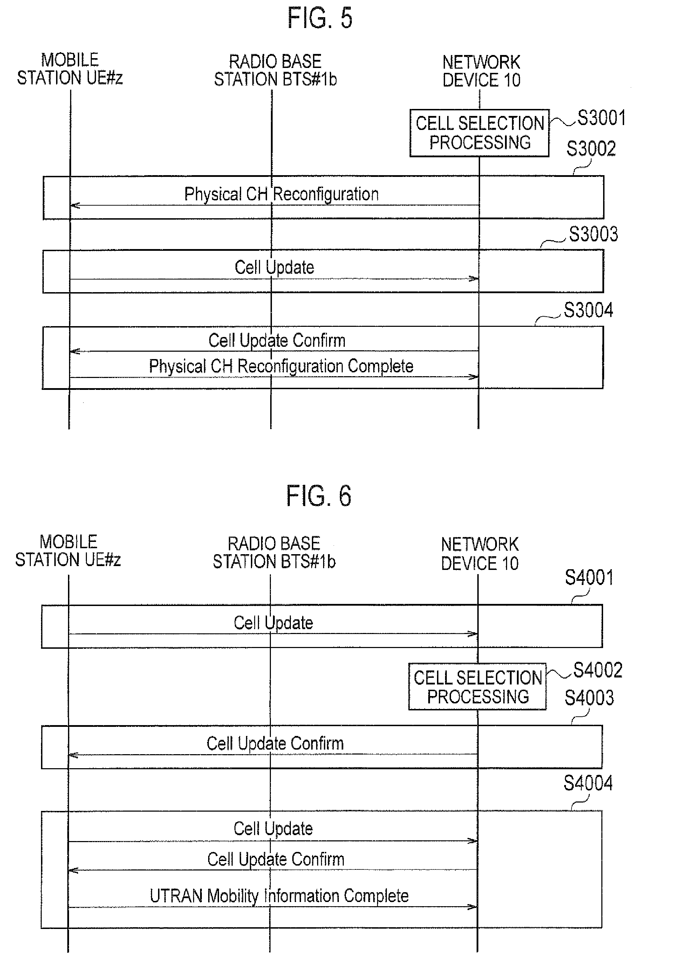

Thirdly, with reference to Fig. 5, a description is given of an operation of setting up (connecting) a common channel of the mobile station UE#z existing in the cell #1 in the mobile communication system according to the first embodiment of the present invention.

As shown in Fig. 5, in Step S3001, the network device 10 selects a second cell #11 as a target cell for connection to which the mobile station UE#z should connect a common channel. For example, the common channel is a channel for control which is used to efficiently utilize radio resources in each cell.

In Step S3002, the network device 10 transmits a channel reconfiguration signal (Physical CH Reconfiguration) to the mobile station UE#z, the signal instructing the mobile station UE#z to set up the common channel in the cell #11.

In Step S3003, the mobile station UE#z transmits a connection request signal (Cell Update) to the network device 10, the signal requesting setup (connection) of the common channel in the cell #11.

In Step S3004, the network device 10 transmits a connection confirmation signal (Cell Update Confirm) to the mobile station UE#z, the signal making a notification that a connection preparation of the common channel is completed. In addition, the mobile station UE#z then transmits a connection setup completion signal (Physical CH Reconfiguration Complete) to the network device 10, the signal making a notification that the connection of the common channel is completed.

Fourthly, with reference to Fig. 6, a description is given of an operation of changing a target cell for connection in the common channel of the mobile station UE#z existing in the cell #1 in the mobile communication system according to the first embodiment of the present invention.

As shown in Fig. 6, in Step S4001, when the mobile station UE#z which sets up (connects) a common channel in the cell #1 detects deterioration of a radio quality in the common channel, the mobile station UE#z transmits a connection request signal (Cell Update) requesting reconnection of the common channel to the network device 10.

In Step S4002, the network device 10 selects the cell #11 as a target cell for connection to which the mobile station UE#z should reconnect the common channel, in response to the reconnection request signal (Cell Update) from the mobile station UE#z.

In Step S4003, the network device 10 transmits a channel reconfiguration signal (Cell Update Confirm) to the mobile station UE#z, the signal instructing the mobile station UE#z to set up the common channel in the cell #11.

In Step S4004, the mobile station UE#z transmits a connection request signal (Cell Update) to the network device 10, then the network device 10 transmits a connection confirmation signal (Cell Update Confirm) to the mobile station UE#z, and then the mobile station UE#z transmits a connection setup completion signal (UTRAN Mobility Information Complete) to the network device 10, the connection request signal requesting setup (connection) of the common channel in the cell #11, the connection confirmation signal making a notification that a connection preparation for the common channel is completed, the connection setup completion signal making a notification that the connection of the common channel is completed.

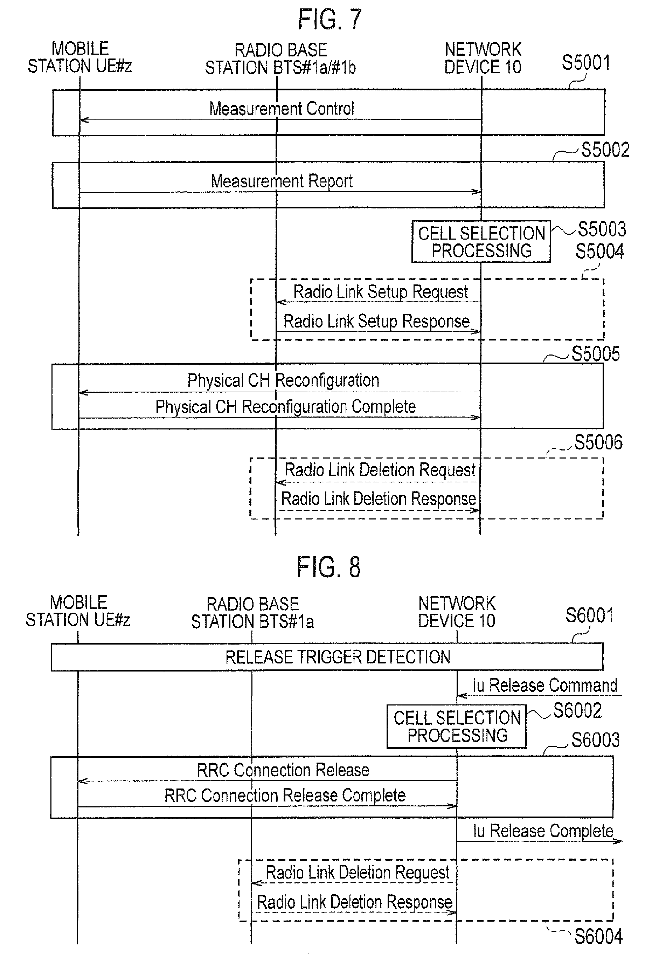

Fifthly, with reference to Fig. 7, a description is given of an operation of changing a target cell for connection in the dedicated channel of the mobile station UE#z existing in the cell #1 (a hard handover operation of the mobile station UE#z existing in the cell #1) in the mobile communication system according to the first embodiment of the present invention.

In Step S5001, the network device 10 transmits a measurement control signal (Measurement Control) to the mobile station UE#z which sets up (connects) the common channel in the cell #1, the signal instructing the mobile station UE#z to measure radio qualities in cells covering the certain area.

In Step S5002, when any of the radio qualities in the cells covering the certain area satisfies a predetermined condition, the mobile station UE#z transmits the measurement result (Measurement Report) to the network device 10.

In Step S5003, the network device 10 selects the cell #11 as the target cell for connection after the handover by the mobile station UE#z, in response to the measurement result (Measurement Report) from the mobile station UE#z.

In Step 55004, the network device 10 transmits a radio link setup request signal (Radio Link Setup Request) to the radio base station for macrocells BTS#1b managing the cell #11, and then the radio base station for macrocells BTS#1b transmits a radio link setup completion signal (Radio Link Setup Response) to the network device 10.

In Step S5005, the network device 10 transmits a connection setup signal (Physical CH Reconfiguration) to the mobile station UE#z, the signal making a notification that a connection preparation for an dedicated channel in the handover target cell is completed. In addition, the mobile station UE#z then transmits a connection setup completion signal (Physical CH Reconfiguration Complete) to the network device 10, the signal making a notification that the connection of the dedicated channel is completed.

In Step S5006, the network device 10 transmits a radio link deletion request signal (Radio Link Deletion Request) to the radio base station for macrocells BTS#1a managing the cell #1, and then the radio base station for macrocells BTS#1a transmits a radio link deletion completion signal (Radio Link Deletion Response) to the network device 10.

Sixthly, with reference to Fig. 8, a description is given of an operation of terminating communication of the mobile station UE#z existing in the cell #1 in the mobile communication system according to the first embodiment of the present invention.

As shown in Fig. 8, in Step S6001, the network device 10 detects a predetermined release trigger, receives, for example, a release signal (Iu Release Command) from a core network, and then determines that the dedicated channel of the mobile station UE#z which sets up (connects) the dedicated channel is released (that is, the communication of the mobile station UE#z is terminated).

In Step S6002, the network device 10 selects the cell #11 as a camp on cell of the mobile station UE#z after the termination of the communication of the mobile station UE#z.

In Step S6003, the network device 10 transmits a release instruction signal (Radio Connection Release) to the mobile station UE#z, the signal instructing the mobile station UE#z to release the dedicated channel in the cell #1. In addition, the mobile station UE#z then transmits a connection completion signal (Radio Connection Release Complete) to the network device 10, the signal making a notification that the release of the dedicated channel is completed.

Here, the network device 10 transmits a release completion signal (Iu Release Complete) to the core network, the signal making a notification that the release of the dedicated channel is completed.

In Step S6004, the network device 10 transmits a radio link deletion request signal (Radio Link Deletion Request) to the radio base station for macrocells BTS#1a managing the cell #1, and then the radio base station for macrocells BTS#1a transmits a radio link deletion completion signal (Radio Link Deletion Response) to the network device 10.

### (Advantageous Effects of Mobile Communication System according to First Embodiment of the Present Invention)

The mobile communication system according to the first embodiment of the present invention makes it possible to eliminate the need for meticulously designing an installation place or the like of a radio base station by a network designer for preventing occurrence of a step difference in frequency (that is, a phenomenon of different coverage area in overlapped cells) as shown in Fig. 1, thus avoiding a situation where a mobile station fails to continue communication or camping on due to cell selection processing.

In addition, the mobile communication system according to the first embodiment of the present invention makes it possible to save power consumption and time which are required for measurements in different frequency cells by mobile stations. This is because there is no need for knowing coverage of communication cells by making each mobile station report all the neighboring cells thereof for avoiding the situation where the mobile station fails to continue communication or camping on due to the cell selection processing.

The aforementioned aspects of this embodiment may be expressed as follows.

A first aspect of this embodiment is summarized as follows. Provided is a network device 10 in a mobile communication system in which multiple cells #1 to #4, #11 to #13, and #141 covering at least part of a certain area and using different frequencies f1 to f4, f11 to f13, and f141 are arranged. The network device includes: a cell information management unit 11 configured to manage cell information including sizes of the multiple cells #1 to #4, #11 to #13, and #141; and a cell selection unit 12 configured to select the target cell for connection or the camp on cell for a mobile station UE#z existing in a first cell #1 included in the multiple cells #1 to #4, #11 to #13, and #141. The cell selection unit 12 selects a second cell #11 having a size larger than the first cell #1 as the target cell for connection or the camp on cell, among the multiple cells #1 to #4, #11 to #13, and #141.

In the first aspect of this embodiment, the cell selection unit 12 may be configured to select the second cell #11 as a target cell for connection to which the mobile station UE#z should connect an dedicated channel, in response to a connection request signal (RRC Connection Request) from the mobile station UE#z, the signal requesting connection of the dedicated channel.

In the first aspect of this embodiment, the cell selection unit 12 may be configured to select the second cell #11 as a target cell for connection to which the mobile station UE#z should reconnect an dedicated channel, in response to a reconnection request signal (Cell Update) from the mobile station UE#z, the signal requesting reconnection of the dedicated channel.

In the first aspect of this embodiment, the cell selection unit 12 may be configured to select the second cell #11 as a target cell for connection to which the mobile station UE#z should connect a common channel.

In the first aspect of this embodiment, the cell selection unit 12 may be configured to select the second cell #11 as the target cell for connection to which the mobile station UE#z should reconnect the common channel, in response to a reconnection request signal (Cell Update) from the mobile station UE#z, the signal requesting reconnection of the common channel.

In the first aspect of this embodiment, the cell selection unit 12 may be configured, upon receipt of a measurement result (Measurement Report) of a radio quality in the mobile station UE#z, to select the second cell #11 as a target cell for connection after a handover by the mobile station UE#z in response to the measurement result.

In the first aspect of this embodiment, the cell selection unit 12 may be configured to select the second cell #11, when communication by the mobile station UE#z is terminated, as a camp on cell of the mobile station UE#z after the termination of communication.

In the first aspect of this embodiment, the multiple cells #1 to #4, #11 to #13, and #141 which cover at least part of the certain area may use the same scramble code SC#a.

A second aspect of this embodiment is summarized as follows. Provided is a cell selection method in a mobile communication system in which multiple cells #1 to #4, #11 to #13, and #141 covering at least part of a certain area and using different frequencies fl to f4, f11. to f13, and f141 are arranged. The cell selection method includes: a step A of managing cell information including sizes of the multiple cells #1 to #4, #11 to #13, and #141 by a network device 10 in the mobile communication system; and a step B of selecting a target cell for connection or a camp on cell by the network device 10 for a mobile station UE#z existing in a first cell #1 included in the multiple cells #1 to #4, #11 to #13, and #141. In the step B, the network device 10 selects a second cell #11 having a size than larger a size of the first cell #1 as the target cell for connection or the camp on cell, among the multiple cells #1 to #4, #11 to #13, and #141.

### (Modification)

Note that the aforementioned operations of the network device 10, the mobile station UE, and the radio base station for femtocell BTS may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the network device 10, the mobile station UE, and the radio base station for femtocell BTS. Also, the storage medium and the processor may be provided in the network device 10, the mobile station UE, and the radio base station for femtocell BTS as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

## Claims

1. A network device in a mobile communication system in which a plurality of cells cover at least part of a certain area and use different frequencies are arranged, the network device comprising:
a cell information management unit configured to manage cell information including sizes of the plurality of cells; and
a cell selection unit configured to select a target cell for connection or a camp on cell for a mobile station existing in a first cell included in the plurality of cells, wherein
the cell selection unit selects a second cell having a size larger than the first cell as the target cell for connection or the camp on cell, among the plurality of cells.

2. The network device according to claim 1, wherein the cell selection unit selects the second cell as the target cell for connection to which an dedicated channel is to be connected by the mobile station, in response to a connection request signal requesting connection of the dedicated channel from the mobile station.

3. The network device according to claim 1, wherein the cell selection unit selects the second cell as the target cell for connection to which an dedicated channel is to be reconnected by the mobile station, in response to a reconnection request signal requesting reconnection of the dedicated channel from the mobile station.

4. The network device according to claim 1, wherein the cell selection unit selects the second cell as the target cell for connection to which a common channel is to be connected by the mobile station.

5. The network device according to claim 1, wherein the cell selection unit selects the second cell as the target cell for connection to which a common channel is to be reconnected by the mobile station, in response to a reconnection request signal requesting reconnection of the common channel from the mobile station.

6. The network device according to claim 1, wherein, upon receipt of a measurement result of a radio quality in the mobile station, the cell selection unit selects the second cell as the target cell for connection after a handover by the mobile station in response to the measurement result.

7. The network device according to claim 1, wherein when communication by the mobile station is terminated, the cell selection unit selects the second cell as the camp on cell of the mobile station after the termination of communication.

8. The network device according to any one of claims 1 to 7, wherein the plurality of cells which cover at least part of the certain area use the same scramble code.

9. A cell selection method in a mobile communication system in which a plurality of cells cover at least part of a certain area and use different frequencies are arranged, the cell selection method comprising:
a step A of managing cell information including sizes of the plurality of cells by a network device in the mobile communication system; and
a step B of selecting a target cell for connection or a camp on cell by the network device for a mobile station existing in a first cell included in the plurality of cells, wherein
in the step B, the network device selects a second cell having a size larger than the first cell as the target cell for connection or the camp on cell, among the plurality of cells.
